# EUROPEAN PATENT SPECIFICATION

(11) **EP 2 033 884 B1**
(45) Date of publication and mention of the grant of the patent: **11.05.2011**
(21) Application number: 08001500.1
(22) Date of filing: 28.01.2008
(51) Int. Cl.: B62J 9/02

(54) **Accesories-holder for a two wheel vehicle**
Zubehörhalter für ein zweirädriges Fahrzeug
Support d'accessoires pour véhicule deux roues

(30) Priority: 04.09.2007 IT MI20071719
(43) Date of publication of application: 11.03.2009
(73) Proprietor: R.S. e V. di Castoldi Sergio, 20040 Usmate-Velate (MI) (IT)
(72) Inventor: R.S. e V. di Castoldi Sergio, 20040 Usmate-Velate (MI) (IT)

(56) References cited:
- DE-C- 802 910
- DE-U1- 29 808 979
- GB-A- 155 626
- GB-A- 190 914 597
- GB-A- 191 126 070
- US-A- 5 217 116

## Description

The present invention refers to an accessories-holder for a two wheel vehicle.

In particular the present invention refers to an accessories-holder and/or tools-holder of a bicycle.

At the present time different typology of bicycle exists as for example normal bicycle, competition bicycle and mountain bicycle, known also with the English term "mountain bike".

Most frequently persons passionate of cycling use their bicycle in the week-end also for long distance.

In these cases it results useful to have a series of spare parts, accessories and tools in case of flat tyres or of other possible problems to the bicycle.

Often consequently people tends to buy a plurality of accessories that then must be inserted into bag which are uncomfortable to hold on the shoulder.

Alternatively one or more accessories can be inserted into container or tied to the bicycle.

Document DE-A-298 08979 discloses the features of the preamble of claim 1.

A first disadvantage is that therefore not being constrained the plurality of accessories it results bulky and few transportable.

A further disadvantage is that not being said accessories correctly constrained, during the use of a bicycle, they can hit themselves or they can hit the bicycle, consequently producing annoying noises and vibrations.

A purpose of the present invention is that to realize an accessories-holder for a two wheels vehicle, in particular of a bicycle, that can be compact and easily transportable.

Another purpose is that to realize an accessories-holder for a two wheels vehicle, in particular of a bicycle, that avoids possible collisions and vibrations between the accessories-holder and an accessory, or among two or more accessories or utensils of a bicycle.

Another purpose is that to realize an accessories-holder for a two wheels vehicle, in particular of a bicycle, that can be housed within a water bottle cage.

Another purpose is that to realize an accessories-holder for a two wheels vehicle, in particular of a bicycle, that can be light and easily transportable.

Yet another purpose is that to realize an accessories-holder and an accessories-holder kit for a two wheels vehicle, in particular of a bicycle, that can be ergonomic, compact and useful.

Further purpose is that to have an accessories-holder for a two wheels vehicle that can be housed in a water bottle cage of standard dimensions.

These objectives according to the present invention are reached by providing an accessories-holder for a two wheels vehicle as specified in claim 1.

Other features of the invention are pointed out in the following claims.

The features and the advantages of an accessories-holder for a two wheels vehicle according to the present invention will appear more evident from the following illustrative and not limitative description, referred to the attached schematic drawings in which:

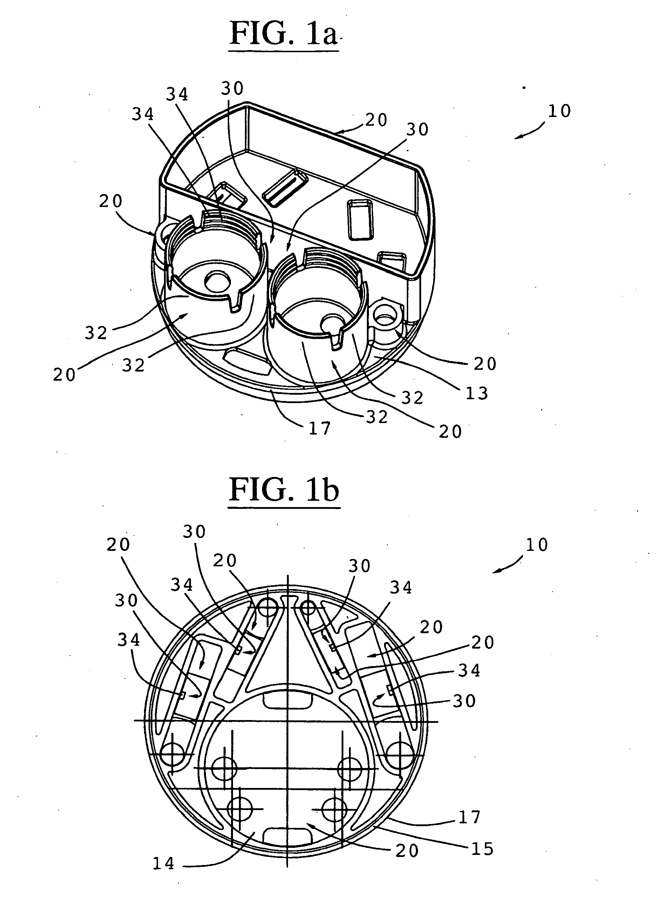

figure 1a is a raised right side perspective top view of a first preferred form of embodiment of an accessories-holder for a two wheel vehicle according to the present invention;
figure 1b is a base bottom view of the accessories-holder of figure 1a;

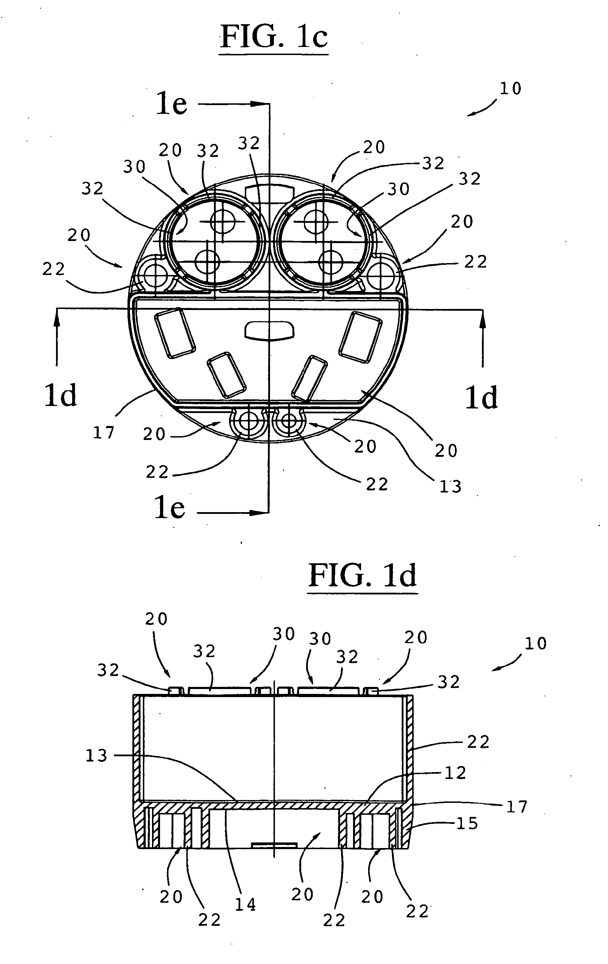

figure 1c is a base top view of the accessories-holder of figure 1a;
figure 1d is a raised frontal view from behind of the accessories-holder of figure 1c sectioned along the line 1d-1d;

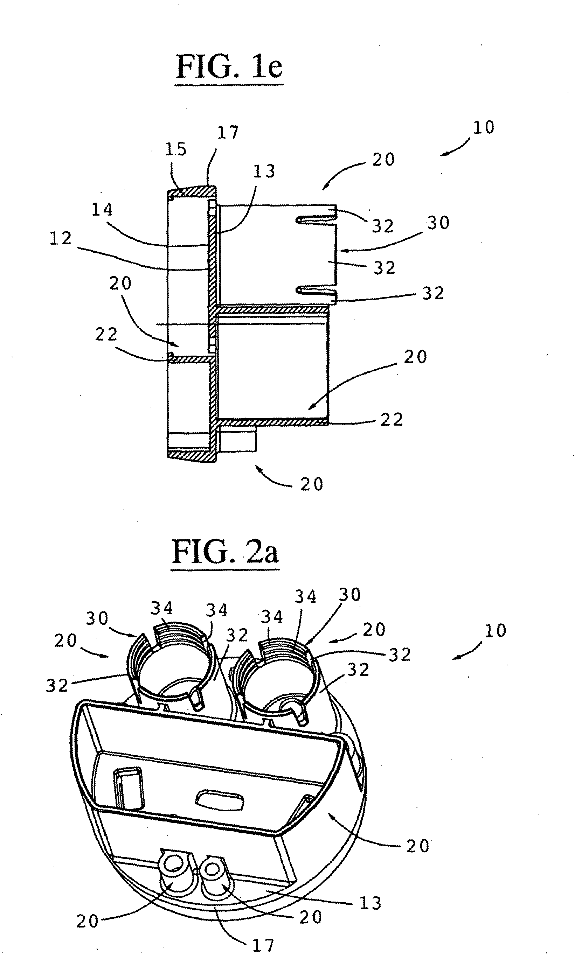

figure 1e is a raised side view of the accessories-holder of figure 1c sectioned along the line 1e-1e;
figure 2a is a raised right side perspective top view of a second preferred form of embodiment of an accessories-holder for a two wheel vehicle according to the present invention;

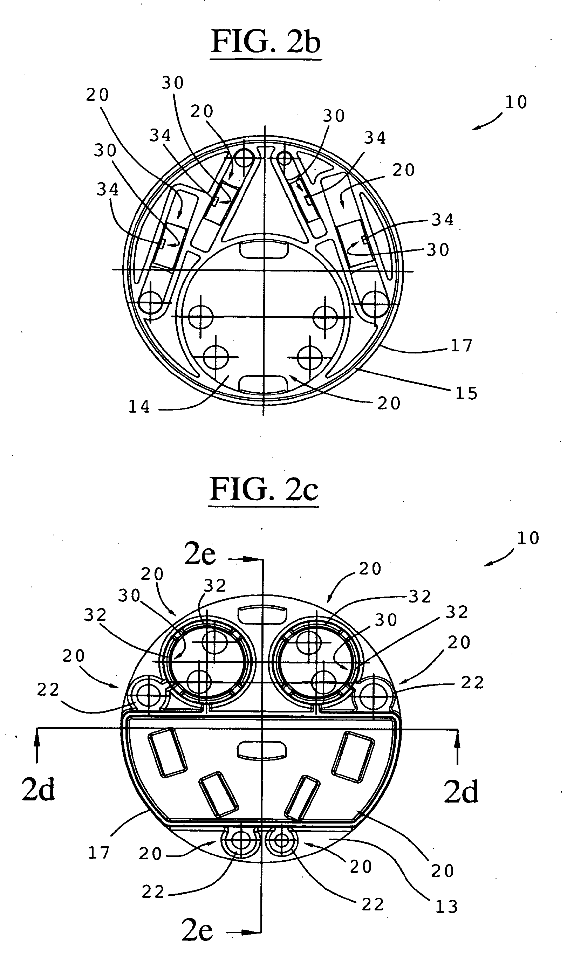

figure 2b is a base bottom view of the accessories-holder of figure 2a;
figure 2c is a base top view of the accessories-holder of figure 2a;

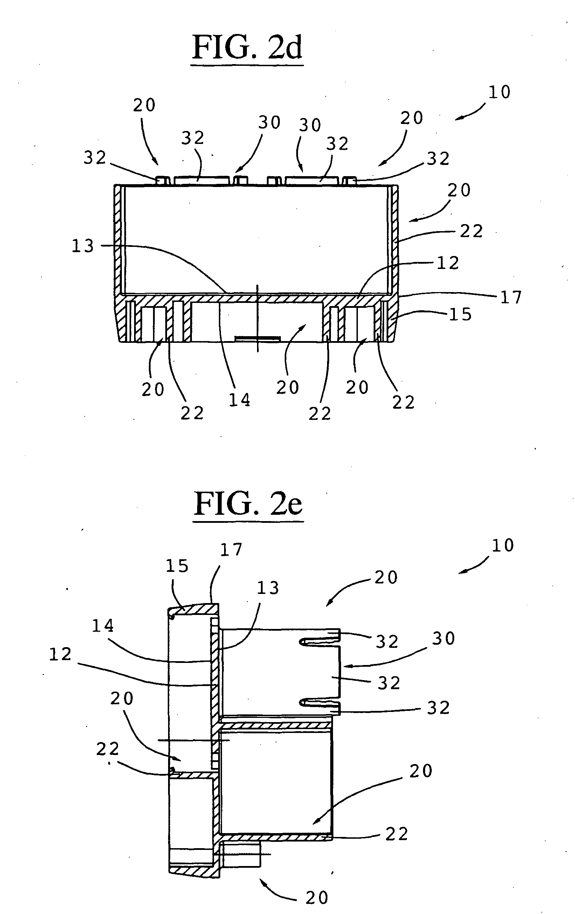

figure 2d is a raised frontal view of the accessories-holder of figure 2c sectioned along the line 2d-2d;
figure 2e is a raised side view of the accessories-holder of figure 2c sectioned along the line 2e-2e;

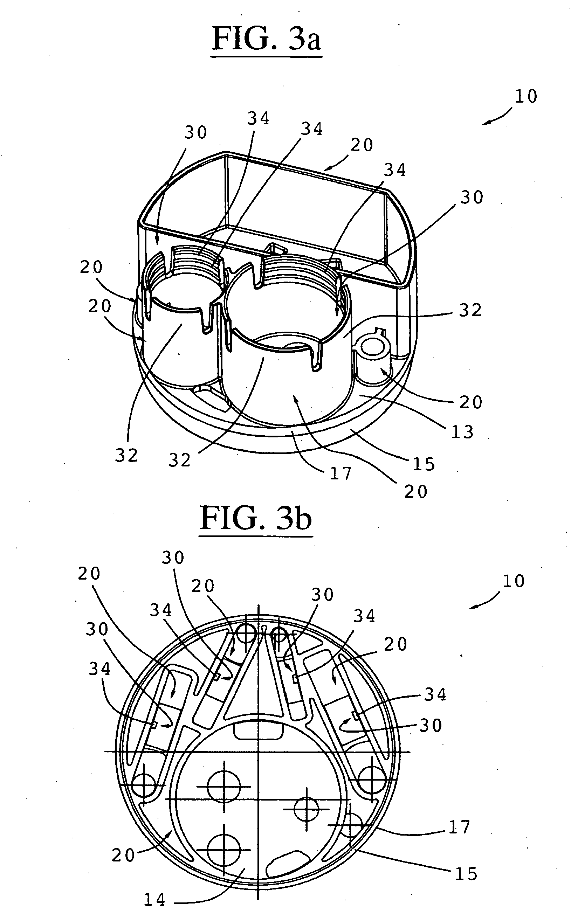

figure 3a is a raised right side perspective top view of a third preferred form of embodiment of an accessories-holder for a two wheel vehicle according to the present invention;
figure 3b is a base bottom view of the accessories-holder of figure 3a;

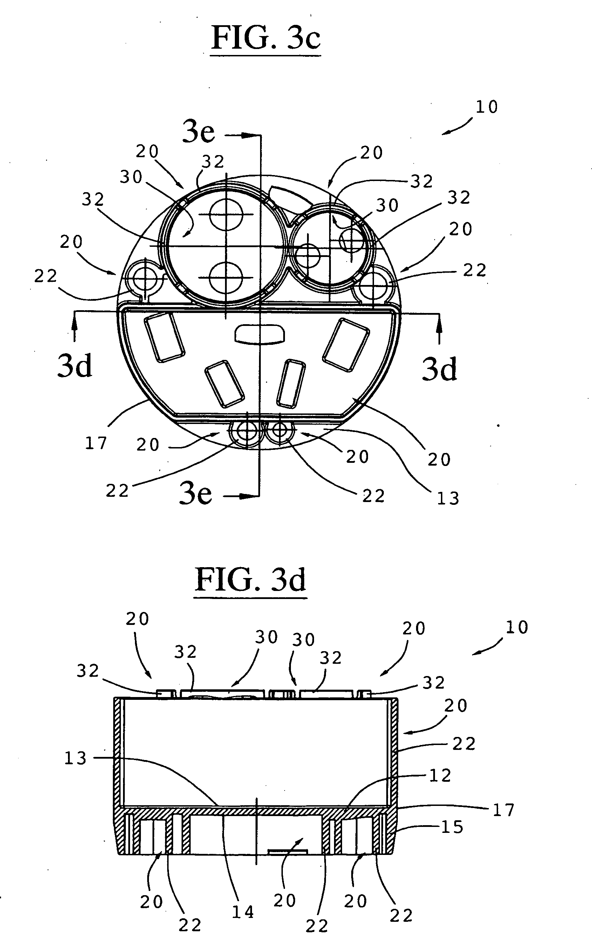

figure 3c is a base top view of the accessories-holder of figure 3a;
figure 3d is a raised frontal view from behind of the accessories-holder of figure 3c sectioned along the line 3d-3d;
figure 3e is a raised side view of the accessories-holder of figure 3c sectioned along the line 3e-3e;
figure 4a is a raised right side perspective top view of a fourth preferred form of embodiment of an accessories-holder for a two wheel vehicle according to the present invention;
figure 4b is a base bottom view of the accessories-holder of figure 4a;

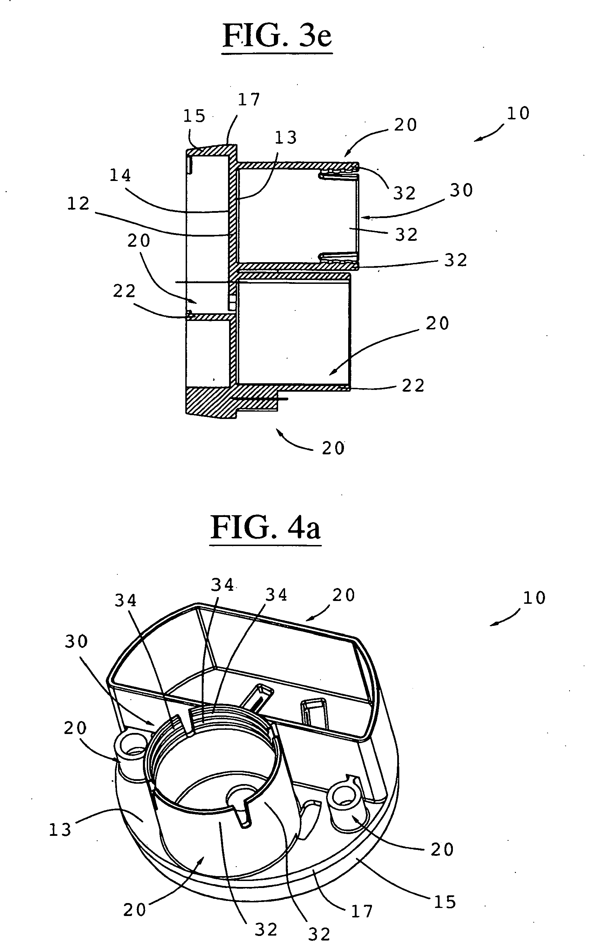

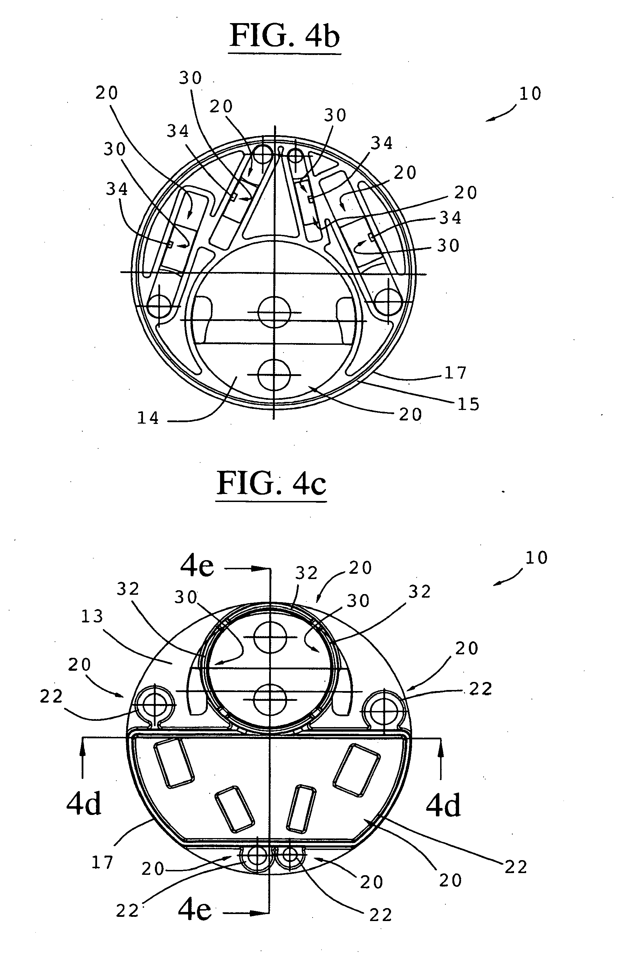

figure 4b is a base top view of the accessories-holder of figure 4a;

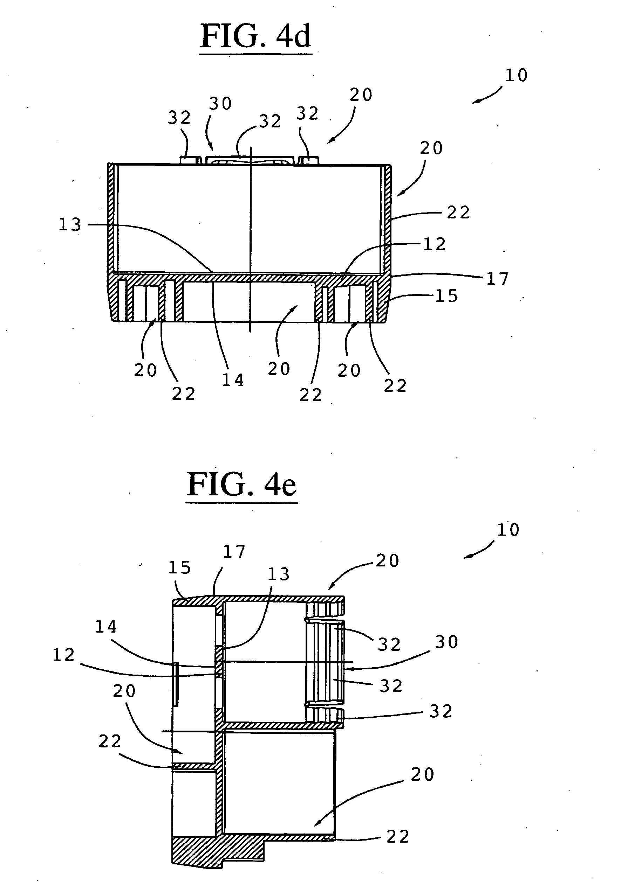

figure 4d is a raised frontal view from behind of the accessories-holder of figure 4c sectioned along the line 4d-4d;
figure 4e is a raised side view of the accessories-holder of figure 4c sectioned along the line 4e-4e;

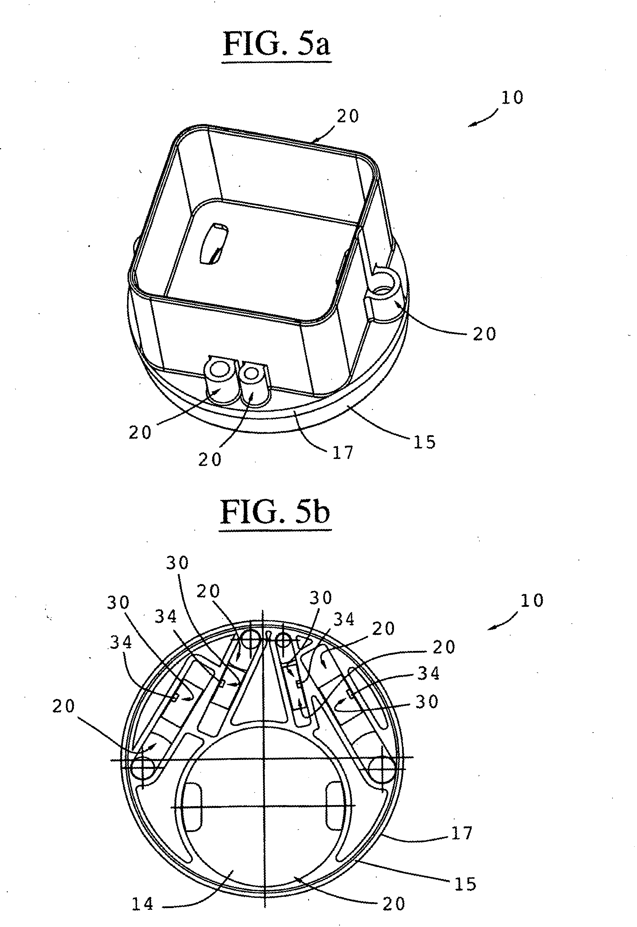

figure 5a is a raised right side perspective top view of a fifth preferred form of embodiment of an accessories-holder for a two wheel vehicle according to the present invention;
figure 5b is a base bottom view of the accessories-holder of figure 5a;
figure 5b is a base top view of the accessories-holder of figure 5a;

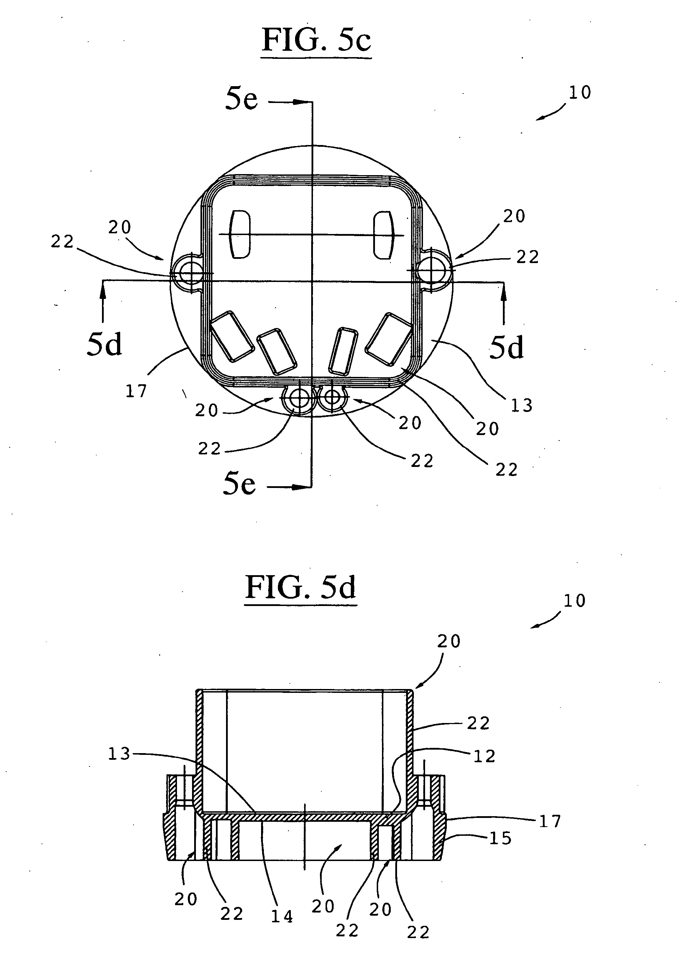

figure 5d is a raised frontal view of the accessories-holder of figure 5c sectioned along the line 5d-5d;

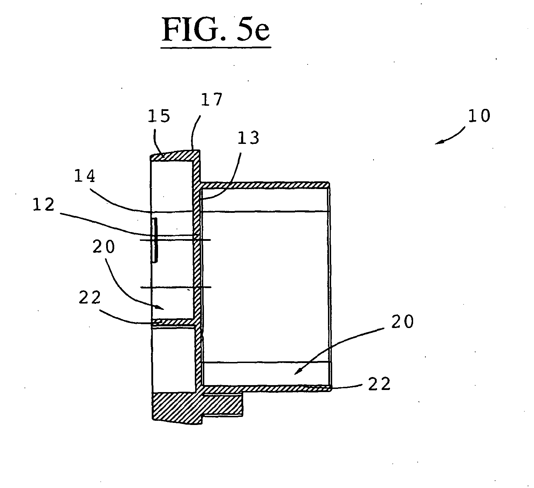

figure 5e is a raised side view of the accessories-holder of figure 5c sectioned along the line 5e-5e;

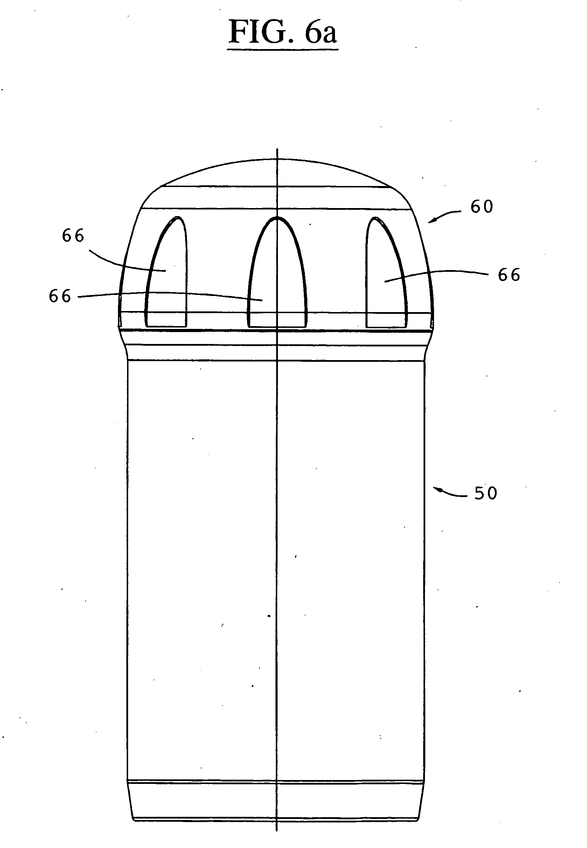

figure 6a is a raised frontal view of a first preferred form of embodiment of an accessories-holder kit according to the present invention;

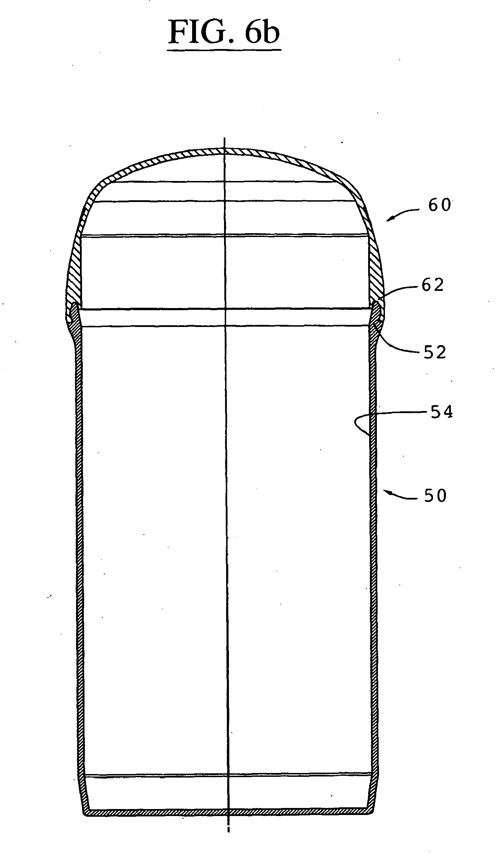

figure 6b is a raised frontal sectioned view of the accessories-holder kit of figure 6a;

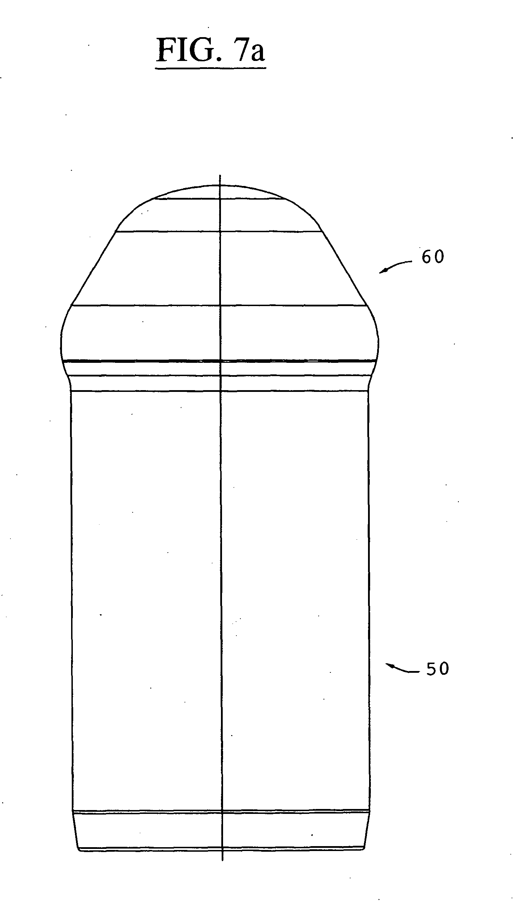

figure 7a is a raised frontal view of a second preferred form of embodiment of an accessories-holder kit according to the present invention;

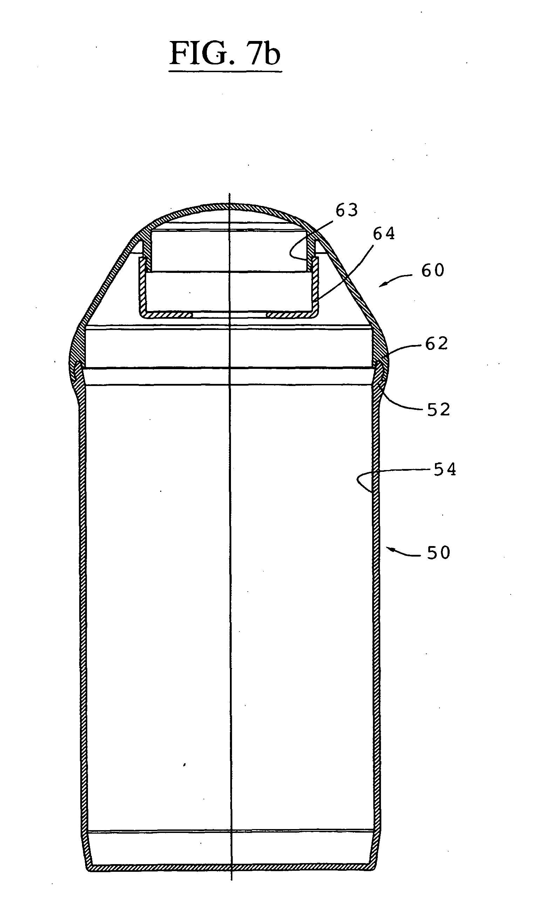

figure 7b is a raised frontal sectioned view of the accessories-holder kit of figure 7a;

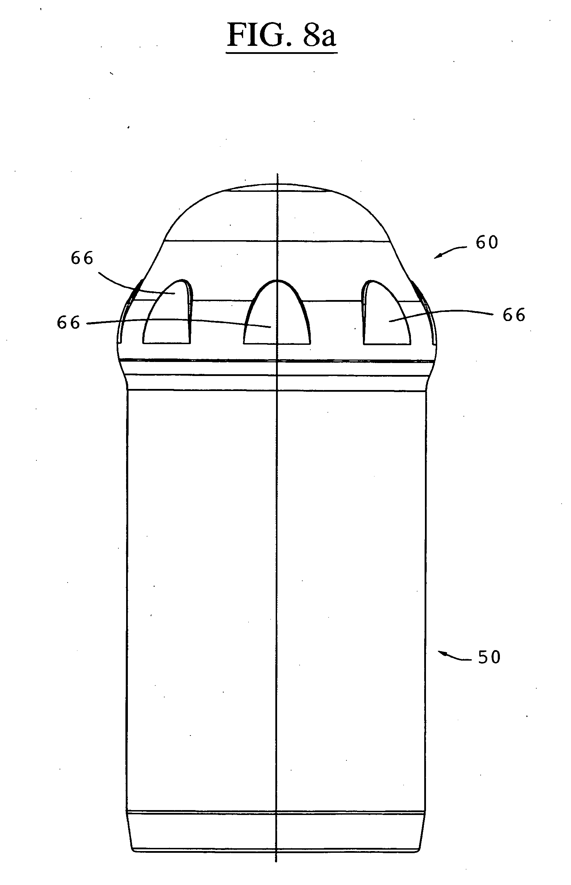

figure 8a is a raised frontal view of a third preferred form of embodiment of an accessories-holder kit according to the present invention;

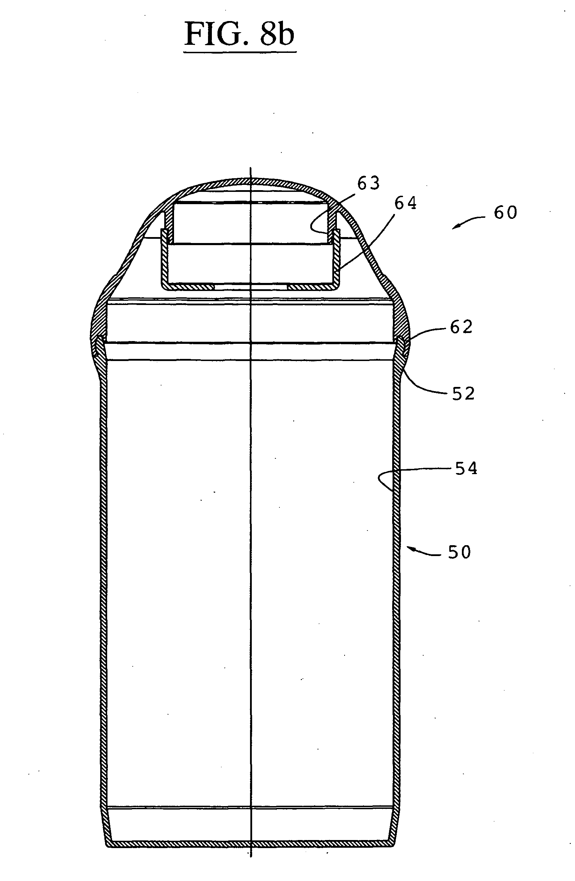

figure 8b is a raised frontal sectioned view of the accessories-holder kit of figure 8a;

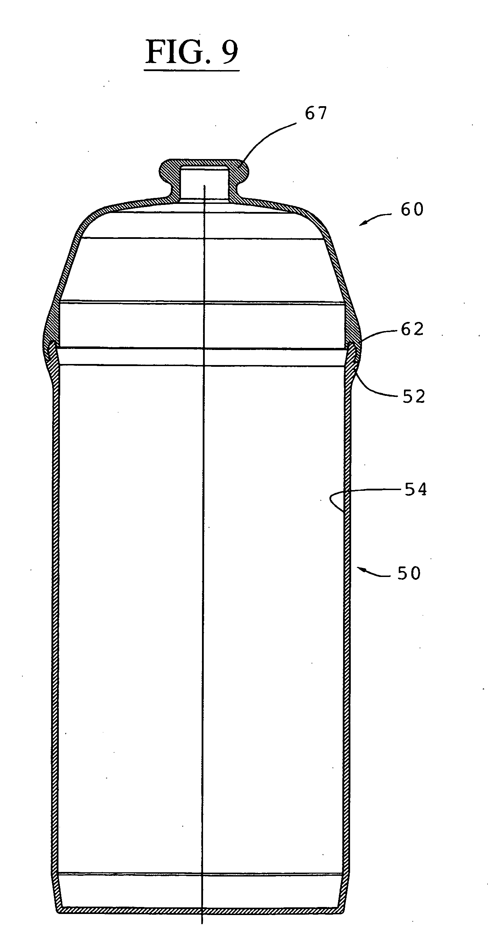

figure 9 is a raised frontal sectioned view of a fourth preferred form of embodiment of an accessories-holder kit according to the present invention;

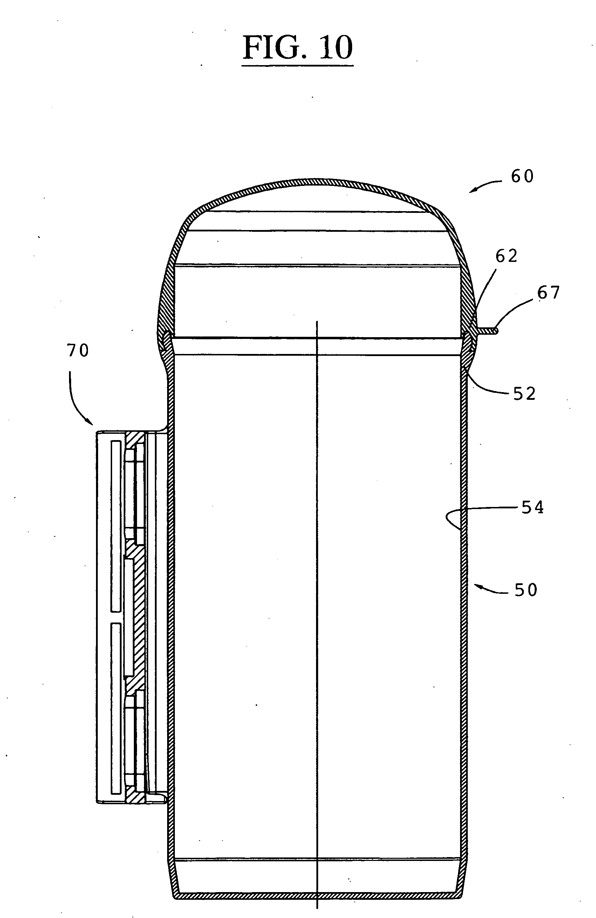

figure 10 is a raised frontal partially sectioned view of a fifth preferred form of embodiment of an accessories-holder kit according to the present invention;

With reference to the figures, it is shown an accessories-holder 10 for a two wheel vehicle, in particular of a bicycle.

The accessories-holder 10 according to a preferred form of embodiment is an accessories-holder 10 of a bicycle which for example a competition bicycle, or a mountain bicycle known also with the English term "mountain bike" or a normal bicycle.

Said accessories-holder 10 includes a plurality of housings 20 of a corresponding plurality of accessories and/or tools, not shown in the figures.

Said plurality of housings 20 is advantageously integrated with said accessories-holder 10.

Advantageously in this way it is obtained an accessories-holder 10 much compact that can house in a reduced volume a plurality of accessories and/or tools for a bicycle.

In particular each housing of said plurality of housings 20 includes releasable fixing means 30 suitable to maintain the corresponding accessory and/or tool in a fixed position both respect to the accessories-holder 10 both respect the other accessories.

In this way it is possible to obtain an accessories-holder 10 very compact and at the same time also easily transportable.

The accessories-holder 10 according to the present invention is therefore able to house a plurality of accessories which are maintained in a fixed position respect to the same, in such way to avoid relative movements respect to the same accessories-holder 10 and also respect to the other accessories of the plurality of accessories.

Advantageously in this way possible collisions are avoided between an accessory and the accessories-holder 10 or among two or more accessories.

Advantageously in this way the noises and consequent vibrations to the collision or collisions are avoided.

This is most important because during long distances the noise and the vibrations continuously generated by collision would remarkably disturb an user of the bicycle.

Another advantage is due to the fact that, when said accessories-holder 10 is mounted on a bicycle, the accessories-holder 10 same and also the plurality of accessories result integral with the same bicycle, avoiding therefore advantageously possible vibrations and relative movements of masses respect to the same bicycle.

Besides when necessary each accessory of the plurality of accessories can easily be extract to be used, and finally inserted and again fixed in an his correspondent housing 20.

Advantageously through said accessories-holder 10 it is possible to easily and quickly insert each accessory or utensil or multi-utensil in a correspondent housing provided with releasable fixing means 30, maintaining the same ordered and well fixed in a position in such way to be next to the other accessories or utensils and at the same time in such way to not interfere with the same.

According to a preferred form of embodiment said releasable fixing means 30 are elastic releasable fixing means 30 suitable to elastically get deformed themselves to fix in a releasable way an accessory or utensil or multi-utensil inserted in a correspondent housing of said plurality of housings 20.

According to a preferred form of embodiment said releasable fixing means 30 are integrated with each housing of said plurality of housings 20.

In other terms said releasable fixing means 30 are realized integral with each correspondent housing of said plurality of housings 20.

Advantageously in this way it is possible to realize in only one piece said accessories-holder 10 and said plurality of housings 20 integrated with said correspondent releasable fixing means 30.

Advantageously in this way it is obtained an economic, strong and compact accessories-holder 10.

According to a preferred form of embodiment said releasable fixing means 30 include at least a rib or protruding element 34 which internally protrudes to a correspondent housing 20 in order to fix in a releasable way an accessory or tool.

Further said at least a rib or protruding element 34 is preferably realized integral with said correspondent housing of said plurality of housings 20 and in particular it is realized integral with a side wall 22 of said correspondent housing of said plurality of housings 20.

According to a preferred form of embodiment said releasable fixing means 30 of each housing 20 include at least a portion 32 elastically deformable in particular in a substantially radial direction, so that to apply an elastic pressure on an accessory or utensil or multi-utensil inserted in the same housing 20.

In particular said elastically deformable portion 32 is realized integral with a side wall 22 of a correspondent housing of said plurality of housings 20.

Preferably said releasable fixing means 30 include at least a rib or protruding element 34 which internally protrudes to a correspondent housing 20, and further said at least a rib or protruding element 34 is preferably realized integral with said elastically deformable portion 32.

Advantageously in this way it is possible insert and maintain fixed in a predetermined position each accessory or tool or multi-tool inserted into a correspondent housing 20.

In the same way it is possible to quickly extract the same in order to use it.

According to a preferred form of embodiment said accessories-holder 10 is realized in a polymeric material, and in particular it is realized in polypropylene and/or his derivatives, or in rubber.

Advantageously in this way it is obtained an accessories-holder 10 light and easily transportable.

Besides being realized in material polymeric, in particular in polypropylene, it is obtained an accessories-holder 10 waterproof and also advantageously shockproof.

According to a preferred form of embodiment said accessories-holder 10, said plurality of housings 20, each of which is integrated with correspondent releasable fixing means 30, are realized in a polymeric material, and in particular they are realized in polypropylene and/or his derivatives, or in rubber.

Advantageously in this way it is obtained an accessories-holder 10 easily realizable in only one piece preferably in a polymeric material.

According to a preferred form of embodiment said accessories-holder 10 includes a base portion 12 having an upper surface 13 and an inferior surface 14 from which preferably said plurality of housings 20 extends in a substantially axial direction.

Preferably said base portion 12 includes a peripheral tubular portion 15 substantially cylindrical.

In particular said peripheral tubular portion 15 is slightly tapered toward an her extremity, in such way to facilitate an insertion of the same in a container of substantially cylindrical form.

According a preferred form of embodiment said base portion 12 shows a base with a substantially axial symmetric shape.

Preferably said base portion 12 is a dish having a substantially circular base or having a regular polygonal base as for example an hexagonal base.

In particular each housing of said plurality of housings 20 extends starting from said base portion 12 substantially without radially protruding respect to the same, or rather without substantially radially protruding respect to a lateral external profile 17 of said base portion 12.

Advantageously in this way it reduces considerably radial encumbrance of said accessories-holder 10 provided of said plurality of accessories and/or tools.

Preferably a part of housings of said plurality of housings 20 extends itself starting from said first upper surface 13 in particular in a substantially axial direction respect to said base portion 12.

Further a remaining part of housings of said plurality of housings 20 extends itself starting from said inferior surface 14 in particular in a substantially axial direction respect to said base portion 12.

According to a preferred form of embodiment said accessories-holder 10 includes a housing of said plurality of housings 20 which it is able to contain, and particularly also to fix in a releasable way, a further accessories-holder 10.

In this way it is therefore possible to get an accessories-holder 10 able to house a further accessories-holder 10 insertable in a housing of the same as a matryoshka.

Advantageously in this way it is obtained an accessories-holder 10 extremely compact and functional.

According a preferred form of embodiment said accessories-holder includes a plurality of accessories and/or tools and/or multi-tools.

Preferably said plurality of accessories e/o tools includes at least a rubber tube for a tyre of said two wheels vehicle or at least a tyre or spare tyre of said two wheels vehicle, at least a pump to inflate said two wheels in particular provided with manual pumping means and/or provided with at least a little bottle containing a pressurized gas, at least a spoke wrench, a plurality of hexagonal keys and/or at least a screwdriver, at least two fit levers suitable to change a wheel of said two wheels vehicle.

Preferably said plurality of accessories and/or tools includes further at least a little bottle containing polymers and a pressurized gas for repairing and to inflate at least a wheel of said two wheel vehicle.

According another aspect of the present invention it is provided an accessories-holder kit and/or tools-holder kit including at least an accessories-holder 10 of the type previously described, and furthermore including an external container 50, in particular provided with at least a tap 60, and furthermore having en internal hollow 54 with a substantially cylindrical shape within which it is possible to house said accessories-holder 10.

In particular, as shown in figures from 6a, 6b, 7a, 7b, 8a, 8b, 9 and 10, said accessories-holder kit and/or tools-holder kit includes advantageously closing means 52 and closing means 62 obtained respectively on said external container 50 and on said tap 60, which are suitable to coupled between themselves in order to close said external container 50.

Preferably said closing means 62 and said closing means 52 are pressure closing means, in particular integrated respectively with said tap 60 and with said external container 50.

According to a preferred form of embodiment said external container 50 provided of at least a corresponding tap 60 is insertable into a water bottle cage of standard dimension.

Advantageously this permit the insertion of the same into the most existing bicycle provided of at least a water bottle cage, in particular into bicycle provided of two water bottle cage.

According a preferred form of embodiment of the present invention said external container 50 provided of at least a corresponding tap 60 is a water bottle in particular of standard dimensions, or rather having a medium diameter preferably included between about 65 and about 78 mm, more in particular having a medium diameter included between about 69 and about 74 mm.

Advantageously in this way if necessary it is possible to use said external container 50 as container for liquid.

According a preferred form of embodiment said external container 50 and said at least a corresponding tap 60 are realized in a metallic or polymeric material.

According a preferred form of embodiment said at least a tap 60 includes an internal housing 63, in particular provided of an internal covering element 64, suitable to contain a further accessory or tool, as for example a spoke wrench.

According a preferred form of embodiment said at least a tap 60 includes a plurality of recess 66 obtained externally to the same to facilitate the disassembly from said external container 50.

With reference to the figure 9, according to a preferred form of embodiment said at least a tap 60 includes a catching element 67 preferably integrated on the external surface of the same.

According to a preferred form of embodiment said accessories-holder kit comprises fastening means 70 suitable to fix the same preferably to a bicycle and in particular to a frame of a bicycle.

Preferably said fastening means 70 are releasable fastening means which are integrated at least partially with said external container 50 in particular shaped as a water bottle.

In this way it has been seen that an accessories-holder for a two wheel vehicle according to the present invention achieves the objectives previously mentioned.

The accessories-holder for a two wheel vehicle of the present invention thus conceived can undergo to numerous modifications and variations, all included in the same inventive concept.

Furthermore, in practice the materials used, as well as their dimensions and the components, can vary according to the technical needs.

## Claims

1. Accessories-holder (10) for a two wheel vehicle, in particular of a bicycle, comprising a plurality of housings (20) of a correspondent plurality of accessories and/or tools, each housing of said plurality of housings (20) being in particular integrated with said accessories-holder (10), and comprising releasable fixing means (30) suitable to maintain the corresponding accessory and/or tool in a fixed position both respect to the accessories-holder (10) both respect the other accessories, **characterized in that** said releasable fixing means (30) are integrated with each housing of said plurality of housings (20) and **in that** said accessories-holder (10), said plurality of housings (20), each of which is integrated with correspondent releasable fixing means (30), are realized in a polymeric material.

2. Accessories-holder (10) according to claim 1, **characterized in that** said releasable fixing means (30) are elastic releasable fixing means (30).

3. Accessories-holder (10) according to claim 1 or 2, **characterized in that** said releasable fixing means (30) include at least a rib or protruding element (34) which internally protrudes to a correspondent housing (20) and **in that** further said at least a rib or protruding element (34) is preferably realized integral with said correspondent housing of said plurality of housings (20).

4. Accessories-holder (10) according to any one of the claims from 1 to 3, **characterized in that** said releasable fixing means (30) of each housing (20) include at least a portion (32) elastically deformable in particular in a substantially radial direction.

5. Accessories-holder (10) according to claim 4, **characterized in that** said
releasable fixing means (30) include at least a rib or protruding element (34) which internally protrudes to a correspondent housing (20), and further said at least a rib or protruding element (34) is preferably realized integral with said elastically deformable portion (32).

6. Accessories-holder (10) according to any one of the claims from 1 to 5, **characterized in that** said accessories-holder (10) is realized in a polymeric material, and in particular it is realized in polypropylene and/or his derivatives, or in rubber.

7. Accessories-holder (10) according to any one of the claims from 1 to 6, **characterized in that** said accessories-holder (10), said plurality of housings (20), each of which is integrated with correspondent releasable fixing means (30), are realized in polypropylene and/or his derivatives, or in rubber.

8. Accessories-holder (10) according to any one of the claims from 1 to 7, **characterized by** comprising a base portion (12) having an upper surface (13) and an inferior surface (14) from which preferably said plurality of housings (20) extends in a substantially axial direction.

9. Accessories-holder (10) according to claim 8, **characterized in that** said base portion (12) includes a peripheral tubular portion (15) substantially cylindrical which is in particular slightly tapered toward an her extremity, in such way to facilitate an insertion of the same in a container of substantially cylindrical form.

10. Accessories-holder (10) according to claim 8 or 9, **characterized in that** said base portion (12) shows a base with a substantially axial symmetric shape.

11. Accessories-holder (10) according to any one of the claims from 8 to 10, **characterized in that** each housing of said plurality of housings (20) extends starting from said base portion (12) substantially without radially protruding respect to the same.

12. Accessories-holder (10) according to any one of the claims from 8 to 11, **characterized in that** a part of housings of said plurality of housings (20) extends itself starting from said first upper surface (13) in particular in a substantially axial direction respect to said base portion (12), further a remaining part of housings of said plurality of housings (20) extends itself starting from said inferior surface (14) in particular in a substantially axial direction respect to said base portion (12).

13. Accessories-holder (10) according to any one of the claims from 1 to 12, **characterized in that** said accessories-holder (10) includes a housing of said plurality of housings (20) which it is able to contain, and particularly also to fix in a releasable way, a further accessories-holder (10).

14. Accessories-holder (10) according to any one of the claims from 1 to 13, **characterized in** by comprising a plurality of accessories and/or tools and/or multi-tools.

15. Accessories-holder (10) according to claim 14, **characterized in that** said plurality of accessories e/o tools includes at least a rubber tube for a tyre of said two wheels vehicle or at least a tyre or spare tyre of said two wheels vehicle, at least a pump to inflate said two wheels in particular provided with manual pumping means and/or provided with at least a little bottle containing a pressurized gas, at least a spoke wrench, a plurality of hexagonal keys and/or at least a screwdriver, at least two fit levers suitable to change a wheel of said two wheels vehicle.

16. Accessories-holder kit and/or tools-holder kit comprising at least an accessories-holder (10) according to any one of the claims from 1 to 15, and further comprising and furthermore including an external container (50), in particular provided with at least a tap (60), and furthermore having en internal hollow (54) with a substantially cylindrical shape within which it is possible to house said accessories-holder (10).

17. Accessories-holder kit and/or tools-holder kit according to claim 16, **characterized by** comprising closing means (52) and closing means (62) obtained respectively on said external container (50) and on said tap (60), which are suitable to coupled between themselves in order to close said external container (50).

18. Accessories-holder kit and/or tools-holder kit according to claim 17, **characterized in that** said closing means (62) and said closing means (52) are pressure closing means in particular integrated respectively with said tap (60) and with said external container (50).

19. Accessories-holder kit and/or tools-holder kit according to any one of the claims from 16 to 18, **characterized in that** said external container (50) provided of at least a corresponding tap (60) is insertable into a water bottle cage of standard dimension.

20. Accessories-holder kit and/or tools-holder kit according to any one of the claims from 16 to 19, **characterized in that** said external container (50) provided of at least a corresponding tap (60) is a water bottle in particular of standard dimensions, or rather having a medium diameter preferably included between about 65 and about 78 mm, more in particular having a medium diameter included between about 69 and about 74 mm.

21. Accessories-holder kit and/or tools-holder kit according to any one of
the claims from 16 to 20, **characterized in that** said external container (50) and said at least a corresponding tap (60) are realized in a metallic or polymeric material.

22. Accessories-holder kit and/or tools-holder kit according to any one of the claims from 16 to 21, **characterized in that** said at least a tap (60) includes an internal housing (63), in particular provided of an internal covering element (64) suitable to contain a further accessory or tool.

23. Accessories-holder kit and/or tools-holder kit according to any one of the claims from 16 to 22, **characterized in that** said at least a tap (60) includes a plurality of recess (66) obtained externally to the same to facilitate the disassembly from said external container (50).

24. Accessories-holder kit and/or tools-holder kit according to any one of the claims from 16 to 23, **characterized by** comprising fastening means (70) suitable to fix the same preferably to a bicycle.

25. Accessories-holder kit and/or tools-holder kit according to any one of the claims from 16 to 24, **characterized in that** said fastening means (70) are releasable fastening means which are integrated at least partially with said external container (50).

## Patentansprüche

1. Zubehör-Halter für ein Zwei-Rad-Fahrzeug, insbesondere ein Fahrrad, eine Vielzahl von Gehäusen (20) einer entsprechenden Vielzahl von Zubehör und/oder Werkzeugen umfassend, wobei jedes Gehäuse der gesagten Vielzahl von Gehäusen (20) im einzelnen mit dem gesagten Zubehör-Halter integriert ist, und lösbare Rastmittel (30) umfassend, die geeignet sind, den entsprechenden Zubehör-Halter und/oder das entsprechende Werkzeug in einer festen Lage sowohl bezüglich des Zubehör-Halters (10) als auch des anderen Zubehörs zu halten, **dadurch gekennzeichnet, dass** die gesagten lösbaren Rastmittel (30) mit jedem Gehäuse der gesagten Vielzahl von Gehäusen integriert sind, und dass der gesagte Zubehör-Halter (10), die gesagte Vielzahl von Gehäusen (20), von denen jedes mit entsprechenden lösbaren Rastmitteln (30) integriert ist, aus einem polymeren Werkstoff gefertigt sind.

2. Zubehör-Halter (10) nach Anspruch 1, **dadurch gekennzeichnet, dass** die gesagten lösbaren Rastmittel (30) elastisch lösbare Rastmittel (30) sind.

3. Zubehör-Halter (10) nach Anspruch 1 oder 2, **dadurch gekennzeichnet, dass** die gesagten lösbaren Rastmittel (30) mindestens einen Steg oder ein hervorstehendes Glied (34) umfassen, das innen gegen ein entsprechendes Glied (20) hervorsteht, und dass darüberhinaus mindestens der gesagte Steg oder das gesagte hervorstehendes Glied (34) vorzugsweise integriert mit dem gesagten entsprechenden Gehäuse der gesagten Vielzahl von Gehäusen (20) ausgeführt sind.

4. Zubehör-Halter (10) nach einem der Ansprüche 1 bis 3, **dadurch gekennzeichnet, dass** die gesagten lösbaren Rastmittel (30) jedes Gehäuses (20) mindestens ein elastisch verformbares Teil (32) enthalten, im einzelnen in einer im Wesentlichen radialen Richtung.

5. Zubehör-Halter (10) nach Anspruch 4, **dadurch gekennzeichnet, dass** die gesagten lösbaren Rastmittel (30) mindestens einen Steg oder ein hervorstehendes Glied (34) umfassen, das innen gegen ein entsprechendes Gehäuse (20) hervorsteht, und dass darüberhinaus mindestens der gesagte Steg oder das gesagte hervorstehendes Glied (34) vorzugsweise integriert mit dem gesagten elastisch verformbaren Teil (32) ausgeführt ist.

6. Zubehör-Halter (10) nach einem der Ansprüche 1 bis 4, **dadurch gekennzeichnet, dass** der gesagte Zubehör-Halter (10) aus einem polymeren Werkstoff gefertigt ist, und im einzelnen entweder aus Polypropylen und/oder seinen Derivaten, oder aus Gummi .

7. Zubehör-Halter (10) nach einem der Ansprüche 1 bis 6, **dadurch gekennzeichnet, dass** der gesagte Zubehör-Halter (10), die gesagte Vielzahl von Gehäusen (20), von denen jedes mit entsprechenden lösbaren Rastmitteln integriert ist, entweder aus Polypropylen und/oder seinen Derivaten gefertigt ist, oder aus Gummi .

8. Zubehör-Halter (10) nach einem der Ansprüche 1 bis 7, ein Basisteil (12) mit einer oberen Fläche (13) und einer unteren Fläche (14) umfassend, aus denen vorzugsweise die gesagte Vielzahl von Gehäusen (20) sich in eine im Wesentlichen axiale Richtung erstreckt.

9. Zubehör-Halter (10) nach Anspruch 8, **dadurch gekennzeichnet, dass** das gesagte Basisteil (12) ein peripheres rohrförmiges im Wesentlichen zylindrisches Teil (15) enthält, das insbesondere leicht geneigt zu einem seiner Enden, in einer solchen Art und Weise, um die Einführung desselben in einen Behälter von im Wesentlichen zylindrischen Gestalt zu vereinfachen.

10. Zubehör-Halter (10) nach Anspruch 8 oder 9, **dadurch gekennzeichnet, dass** das gesagte Basisteil (12) eine Basis mit einer im Wesentlichen achssymmetrischen Gestalt zeigt.

11. Zubehör-Halter (10) nach einem der Ansprüche 8 bis 10, **dadurch gekennzeichnet, dass** jedes der gesagten Vielzahl von Gehäusen (20) sich aus dem gesagten Hauptteil (12) erstreckt, im Wesentlichen ohne aus demselben radial hervorzustehen.

12. Zubehör-Halter (10) nach einem der Ansprüche 1 bis 6, **dadurch gekennzeichnet, dass** der gesagte Zubehör-Halter (10), die gesagte Vielzahl von Gehäusen (20), von denen jedes mit entsprechenden lösbaren Rastmitteln integriert ist, entweder aus Polypropylen und/oder seinen Derivaten gefertigt ist, oder aus Gummi .

13. Zubehör-Halter (10) nach einem der Ansprüche 1 bis 12, **dadurch gekennzeichnet, dass** der gesagte Zubehör-Halter (10) ein Gehäuse der gesagten Vielzahl von Gehäusen (20) umfasst, das in der Lage ist, in einer lösbaren Weise einen weiteren Zubehör-Halter (10) zu enthalten und im Wesentlichen auch zu befestigen.

14. Zubehör-Halter (10) nach einem der Ansprüche 1 bis 13, **dadurch gekennzeichnet, dass** er eine Vielzahl von Zubehör und/oder Werkzeugen und/oder Multi-Tools umfasst.

15. Zubehör-Halter (10) nach Anspruch 14, **dadurch gekennzeichnet, dass** die gesagte Vielzahl von Zubehör und/oder Werkzeugen mindestens ein Rohr aus Gummi umfasst, für einen Reifen des gesagten Zwei-Rad-Fahrzeuges oder mindestens einen Reifen oder Reserve-Rad des gesagten Zwei-Rad-Fahrzeuges, mindestens eine Pumpe um die gesagten zwei Räder aufzupumpen, im einzelnen mit von Hand betätigbaren Mitteln der Pumpe und/oder mindestens mit einer kleinen Flasche die ein Gas unter Druck enthält, mindestens einen Schlüssel für die Speichen, eine Vielzahl von Sechskantschlüsseln und/oder mindestens einen Schraubendreher, mindestens zwei Hebel die in der Lage sind, ein Rad des gesagten Zwei-Rad-Fahrzeug auszutauschen.

16. Zubehör-Kit und/oder Werkzeug-Kit, umfassend mindestens einen Zubehör-Halter (10) nach jeder der Ansprüche 1 bis 15, und darüberhinaus auch einen äußeren Behälter (50) enthaltend, mit mindestens einem Hahn (60), und darüberhinaus mit einer inneren Aussparung (54) mit einer im Wesentlichen zylindrischen Gestalt, in der der gesagte Zubehör-Halter (10) aufgenommen werden kann.

17. Zubehör-Kit und/oder Werkzeug-Kit nach Anspruch 16, **dadurch gekennzeichnet, dass** es Schließmittel (52) und Schließmittel (62) umfasst, die jeweils auf dem gesagten Behälter (50) und auf dem gesagten Hahn (60) erhalten sind, die in der Lage sind miteinander gekoppelt zu werden, um den gesagten äußeren Behälter (50) zu schließen.

18. Zubehör-Kit und/oder Werkzeug-Kit nach Anspruch 17, **dadurch gekennzeichnet, dass** die gesagten Schließmittel (70) und die gesagten Schließmittel (52) mi Druck schließende Mittel sind, die insbesondere jeweils mit dem gesagten Hahn (60) und mit dem gesagten äußeren Behälter (50) integriert sind.

19. Zubehör-Kit und/oder Werkzeug-Kit nach einem der Ansprüche 16 bis 18, **dadurch gekennzeichnet, dass** der gesagte äußere Behälter (50), der mit mindestens einem entsprechenden Hahn vorgesehen ist, in eine Kassette von Flaschen Wasser von Standard-Abmessungen eingeführt werden kann.

20. Zubehör-Kit und/oder Werkzeug-Kit nach einem der Ansprüche 16 bis 19, **dadurch gekennzeichnet, dass** der äußere mit wenigstens einem entsprechenden Hahn (60) vorgesehener Behälter (50) eine Flasche Wasser im Wesentlichen von Standard-Abmessungen ist, oder besser er hat einen mittleren Durchmesser vorzugsweise zwischen 65 und etwa 78 mm, mehr im Wesentlichen mit einem mittleren Durchmesser zwischen 69 und etwa 74 mm.

21. Zubehör-Kit und/oder Werkzeug-Kit nach einem der Ansprüche 16 bis 20, **dadurch gekennzeichnet, dass** der gesagte äußere Behälter (50) und der gesagte entsprechender Hahn (60) aus einem metallenen oder polymeren Werkstoff gefertigt sind.

22. Zubehör-Kit und/oder Werkzeug-Kit nach einem der Ansprüche 16 bis 21, **dadurch gekennzeichnet, dass** mindestens ein Hahn (60) ein inneres Gehäuse (63) enthält, das insbesondere mit einem inneren Deckelteil (64) versehen ist, das in der Lage ist, ein weiteres Zubehör oder Werkzeug zu enthalten.

23. Zubehör-Kit und/oder Werkzeug-Kit nach einem der Ansprüche 16 bis 22, **dadurch gekennzeichnet, dass** mindestens ein Hahn (60) eine Vielzahl von Aussparungen (66) enthält, die extern zu demselben erzeugt sind, um die Demontage aus dem gesagten äußeren Behälter zu vereinfachen.

24. Zubehör-Kit und/oder Werkzeug-Kit nach einem der Ansprüche 16 bis 23, **dadurch gekennzeichnet, dass** es Rastmittel (70) enthält, die geeignet sind um dieselben vorzugsweise an einem Fahrrad zu befestigen.

25. Zubehör-Kit und/oder Werkzeug-Kit nach einem der Ansprüche 16 bis 24, **dadurch gekennzeichnet, dass** die gesagten Rastmittel (70) lösbare Rastmittel sind, die mindestens teilweise mit den gesagten äußeren Behältern (50) integriert sind.

## Revendications

1. Porte-accessoires (11) pour un véhicule à deux roues, notamment une bicyclette, comprenant une pluralité de boîtiers (20) d'une correspondante pluralité d'accessoires ou outils, chaque boîtier de la dite pluralité de boîtiers (20) étant en particulier intégré avec le dit porte-accessoires (10), et comprenant des moyens de fixage séparables (30) aptes à maintenir le correspondant accessoire et/ou outil dans une position fixe avec regard au porte-accessoires (10) soit en relation aux autres accessoires, **caractérisé en ce que** les dits moyens de fixage (30) séparables sont intégrés avec le dit boîtiers de la dite pluralité de boîtiers (20) et que le dit porte-accessoires (10), la dite pluralité de boîtiers (20), chacun desquels est intégré avec des correspondants moyens di fixage (30) séparables, sont réalisés dans un matériel polymérique.

2. Porte-accessoires (10) selon la revendication 1, **caractérisé en ce que** les dits moyens de fixage séparables (30) sont des moyens de fixage élastiques (30).

3. Porte-accessoires (10) selon la revendication 1 ou 2, **caractérisé en ce que** les dits moyens de fixage séparables (30) comprennent au moins une nervure ou un élément en saillie (34) qui à l'intérieur avance vers un correspondant boîtiers (20) et que la dite au moins single nervure ou élément en saillie est préférablement réalisé intégral avec le dit correspondant boîtier de la dite pluralité de boîtiers (20).

4. Porte-accessoires (10) selon une quelconque des revendications 1 à 3, **caractérisé en ce que** les dits moyens de fixage séparables (30) de chaque boîtier (20) comprennent au moins une partie (32) élastiquement déformable notamment dans une direction substantiellement radiale.

5. Porte-accessoires (10) selon la revendication 4, **caractérisé en ce que** les dits moyens de fixage séparables (30) comprennent au moins une nervure ou un élément en saillie (34) qui à l'intérieur avance vers un correspondant boîtier (20), et en outre ou moins le dite nervure ou élément aboutissant (34) est de préférence réalisé intégral avec la dite partie (32) élastiquement déformable.

6. Porte-accessoires (10) selon l'une quelconque des revendications 1 à 5, **caractérisé en ce que** le dit porte-accessoires (10) est réalisé dans un matériel polymérique, and en particulier il est réalisé en polypropylène et/ou ses dérivés, ou en caoutchouc.

7. Porte-accessoires (10) selon l'une quelconque des revendications 1 à 6, **caractérisé en ce que** les dit porte-accessoires (10), la dite pluralité de boîtiers (20), chacune desquelles est intégrée avec des correspondants moyens de fixage séparables (30), sont réalisés en polypropylène et/ou ses dérivés, ou en caoutchouc.

8. Porte-accessoires (10) selon l'une quelconque des revendications 1 à 7, **caractérisé en ce qu'**il comprend une partie de base (12) ayant une face supérieure (13) et une face inférieure (14) à partir des quelles préférablement la dite pluralité de boîtiers (20) s'étend dans une direction substantiellement axiale.

9. Porte-accessoires (10) selon la revendication 8, **caractérisé en ce que** la dite partie de base (12) comprend une partie tubulaire périphérique (15) substantiellement cylindrique qui en particulier est légèrement effilée vers une de ses extrémités, en manière à faciliter une insertion de la même dans un conteneur avec une forme substantiellement cylindrique.

10. Porte-accessoires (10) selon les revendications 8 ou 9, **caractérisé en ce que** la dite partie de base (12) montre une base avec une forme axiale substantiellement symétrique.

11. Porte-accessoires (10) selon l'une quelconque des revendications 8 à 10, **caractérisé en ce que** chaque boîtier de la dite pluralité de boîtiers (20) s'étend de la dite partie de base (12) substantiellement sans avancer radialement en relation a la même.

12. Porte-accessoires (10) selon l'une quelconque des revendications 8 à 11, **caractérisé en ce que** une partie des boîtiers de la dite pluralité de boîtiers (20) s'étend à partir de la dite face supérieure (13) en particulier dans une direction substantiellement axiale en relation à la dite partie de base (12), et en outre une partie restante de boîtiers de la dite pluralité de boîtiers (20) s'étend à partir de la dite face inférieure (14) en particulier dans une direction substantiellement axiale en relation à la dite partie de base (12).

13. Porte-accessoires (10) selon l'une quelconque des revendications 1 à 12, **caractérisé en ce que** le dit porte-accessoires (10) comprend un boîtier de la dite pluralité de boîtiers (20) qui est apte à contenir, et en particulier aussi à fixer dans une manière séparable, un ultérieur porte-accessoires (10).

14. Porte-accessoires (10) selon l'une quelconque des revendications 1 à 13, **caractérisé en ce qu'**il comprend une pluralité d'accessoires et/ou outils et/ou multi-outils.

15. Porte-accessoires (10) selon la revendication 14, **caractérisé en ce que** la dite pluralité d'accessoires et/ou outils comprend au moins un tube en caoutchouc pour un pneumatique du dix véhicule à deux roues ou au moins un pneumatique ou pneumatique de réserve du dit véhicule à deux roues, au moins une pompe pour gonfler les dites deux roues en particulier pourvue de moyens de pompage manuels et/ou pourvue d'au moins une petite bouteille contenant un gaz pressurisé, au moins une clé pour les rayons, une pluralité de clés hexagonales et/ou au moins un tournevis, au moins deux leviers de montage aptes à changer une roue du dit véhicule à deux roues.

16. Ensemble d'un porte-accessoires et/ou ensemble d'un porte-outils comprenant au moins un porte-accessoires (10) selon l'une quelconque des revendications 1 à 15, et comprenant aussi et incluant en outre un conteneur extérieur (50), en particulier pourvu d'au moins un robinet (60), et ayant en outre une cavité intérieure (54) avec une forme substantiellement cylindrique dans la quelle il est possible de loger le dit porte-accessoires (10).

17. Ensemble d'un porte-accessoires et/ou ensemble d'un porte-outils selon la revendication 16, **caractérisé en ce qu'**il comprend des moyens de fermeture (52) et des moyens de fermeture (62) obtenus respectivement sur le dit conteneur extérieur (50) et sur le dit robinet (60), qui sont aptes à être couples entre eux en manière de fermer le dit conteneur extérieur.

18. Ensemble d'un porte-accessoires et/ou ensemble d'un porte-outils selon la revendication 17, **caractérisé en ce que** les dits moyens de fermeture (62) et les dits moyens de fermeture (52) sont des moyens de fermeture à pression en particulier intégrés respectivement avec le dit robinet (60) et avec le dit conteneur extérieur (50).

19. Ensemble d'un porte-accessoires et/ou ensemble d'un porte-outils selon l'une quelconque des revendications 16 à 18, **caractérisé en ce que** le dit conteneur extérieur (50) pourvu d'au moins un correspondant robinet (60) peut être inséré dans une cassette de bouteilles d'eau de dimension standard.

20. Ensemble d'un porte-accessoires et/ou ensemble d'un porte-outils selon l'une quelconque des revendications 16 à 19, **caractérisé en ce que** le dit conteneur extérieur (50) pourvu d'au moins un correspondant robinet (60) est une bouteille d'eau en particulier de dimensions standard, ou plutôt il a un diamètre moyen préférablement compris entre 65 et environ 78 mm, plus en particulier il a un diamètre moyen compris entre 69 et environ 74 mm.

21. Ensemble d'un porte-accessoires et/ou ensemble d'un porte-outils selon l'une quelconque des revendications 16 à 20, **caractérisé en ce que** le dit conteneur extérieur (50) et le dit au moins correspondant robinet (60) sont réalisés dans un matériel métallique ou polymérique.

22. Ensemble d'un porte-accessoires et/ou ensemble d'un porte-outils selon l'une quelconque des revendications 16 à 21, **caractérisé en ce que** le dit au moins single robinet (60) comprend un boîtier intérieur (63), en particulier pourvu d'un élément de couverture intérieur (64) apte à contenir un autre accessoire ou outil.

23. Ensemble d'un porte-accessoires et/ou ensemble d'un porte-outils selon l'une quelconque des revendications 16 à 22, **caractérisé en ce que** le dit au moins single robinet (60) comprend une pluralité de cavités (66) obtenues à l'extérieur du même à fin de faciliter le démontage du dit conteneur extérieur.

24. Ensemble d'un porte-accessoires et/ou ensemble d'un porte-outils selon l'une quelconque des revendications 16 à 23, **caractérisé en ce qu'**il comprend des moyens de fixage (70) aptes à fixer le même en préférence à une bicyclette.

25. Ensemble d'un porte-accessoires et/ou ensemble d'un porte-outils selon l'une quelconque des revendications 16 à 24, **caractérisé en ce que** les dits moyens de fixage (70) sont des moyens de fixage séparables qui sont intégrés au moins partiellement avec le dit conteneur extérieur (50).
